Europäisches Patentamt

European Patent Office

Office européen des brevets

(19)

(11) Publication number: **0 036 568**
**B1**

(12) **EUROPEAN PATENT SPECIFICATION**

(45) Date of publication of patent specification: **01.02.84**

(51) Int. Cl.³: **B 61 H 15/00, F 16 D 65/56**

(21) Application number: **81101807.6**

(22) Date of filing: **12.03.81**

(54) **Brake unit comprising a slack adjuster.**

(30) Priority: **26.03.80 DE 3011713**

(43) Date of publication of application:
**30.09.81 Bulletin 81/39**

(45) Publication of the grant of the patent:
**01.02.84 Bulletin 84/5**

(84) Designated Contracting States:
**CH DE FR GB IT LI SE**

(56) References cited:
**DE - B - 1 222 961**
**DE - C - 1 153 411**
**GB - A - 1 448 309**
**US - A - 3 430 739**
**US - A - 4 019 426**

(73) Proprietor: **Knorr-Bremse GmbH**
**Moosacher Strasse 80**
**D-8000 München 40 (DE)**

(72) Inventor: **Persson, Erling**
**Konsertvägen 7**
**S-24500 Staffanstorp (SE)**
Inventor: **Axelsson, Lars Bengt**
**V. Kristinelundsvägem 30**
**S-21748 Malmö (SE)**

Courier Press, Leamington Spa, England.

Brake unit comprising a slack adjuster

Background to the invention:

This invention relates to a brake unit, preferably for a railway vehicle brake rigging comprising an automatically operating device for adjusting the slack between the wear surfaces of the brake and of the type in which a substantial part of the brake force is transmitted via a nut clutchably engageable with a flange following linear movements of a brake actuating part of the unit and normally being connected via non-selflocking threads to a brake force transmitting element which is displaceable relative said brake actuating part in the directions of the movements of of said brake actuating part.

The German Patent Specification DE—B—12 22 961 describes a brake unit of this type in which a second nut — denoted feeder nut — has been threaded on said nut — denoted locking nut — threaded to said brake force transmitting element. The feeder nut is following the axial movements of the locking nut during normal idle movements of the brake rigging — i.e. until the braking surfaces engage each other. However, in case of excessive slack in the rigging the feeder nut is retained axially after a travel corresponding to normal slack and during the release stroke of the brake the locking nut is caused to move axially so as to obtain its original axial distance to the feeder nut while increasing the total length of said brake force transmitting elements and said brake actuating part.

It will be understood that said known device may perform a braking operation while excessive slack exists in the rigging because the slack adjustment does not take place during the application of the brake, but only during the return stroke of the brake unit.

Other brake units have been described e.g. in the U.S. Patent Specification No. 3,430,739 showing a device capable of adjusting the slack between the wear surfaces of the brake already during the initial stages of a brake application movement of a brake rigging having undesired amount of slack. However, brake units of this type must comprise rather strong springs for accumulating the energy necessary to release during slack take-up and they must also comprise rather strong return springs in order to provide force for reloading said strong energy accumulating springs.

The object of the present invention is to design a brake unit of the kind referred to in which the slack adjustment is performed already during the application of the brake and in which the idle motion of the piston in the piston-cylinder unit i.e. the motion during which the braking surfaces have not yet entered into contact with each other — could be used more economically. It should be possible to obtain different internal gear ratios in the brake unit before and after the braking surfaces have engaged each other.

Another object of the invention is to design a brake unit having a return spring with comparatively low force taking its necessary energy transmitting function into account.

Said object may be obtained with a brake unit of the type referred to above, which according to the invention is characterised that a spring is mounted to exert a force on said nut and said force transmitting element having the shape of a sleeve surrounding a spindle integral with said nut in such direction as to increase the total length of said sleeve and said spindle, elements transmitting the force of said spring during the idle movement of the brake rigging comprising a flange having a first clutch surface capable to transmit torque and an axial force and being connected to the piston of a piston-cylinder unit included in the brake unit, the cylinder of said piston-cylinder unit being provided with a shoulder surface limiting the axial movement of the spindle in the brake release direction and that the spindle is movably mounted in the brake applying direction against the influence of a compression spring, a locking element which is mounted to rotate and axially move relative to said spindle through non-selflocking threads and which is an element transmitting force from said spring being influenced by a further spring resting against the piston in the direction to form a clutch connection with said first clutch surface on said flange, and that the piston is provided with a second clutch surface adapted to transmit torque and axial forces in the direction opposite to the axial direction of said first clutch surface and adapted to form a clutch with a corresponding clutch surface on said spindle in case shoulder surfaces on the spindle and on the locking element being arranged at a smaller mutual axial distance have engaged each other and thereby disengaged the clutch connection between said locking element and said flange.

Object and summary of the invention:

It is an object of the present invention to design the brake unit in such a way that the idle motion of the piston in the piston-cylinder unit — i.e. the motion during which the braking surfaces have not yet entered into contact with each other — could be used more economically. It should be possible to obtain different internal gear ratios in the brake unit before and after the braking surfaces have engaged each other.

Another object of the invention is to design a brake unit having a return spring with comparatively low force taking its necessary energy transmitting function into account.

The invention will now be described in detail by way of the following figures:

Fig. 1 is a section through a brake unit according to the invention comprising an automatic slack adjuster capable to reduce excessive slack in a brake rigging.

Fig. 2 is a section through a similar brake unit which is also capable of increasing insufficient slack.

Fig. 3 is a section through a modified embodiment of a brake unit having a function similar to that of Fig. 1, and

Fig. 4 is a section through an embodiment in which the slack-adjusting is carried out by activating a different type of spring force.

DETAILED DESCRIPTION

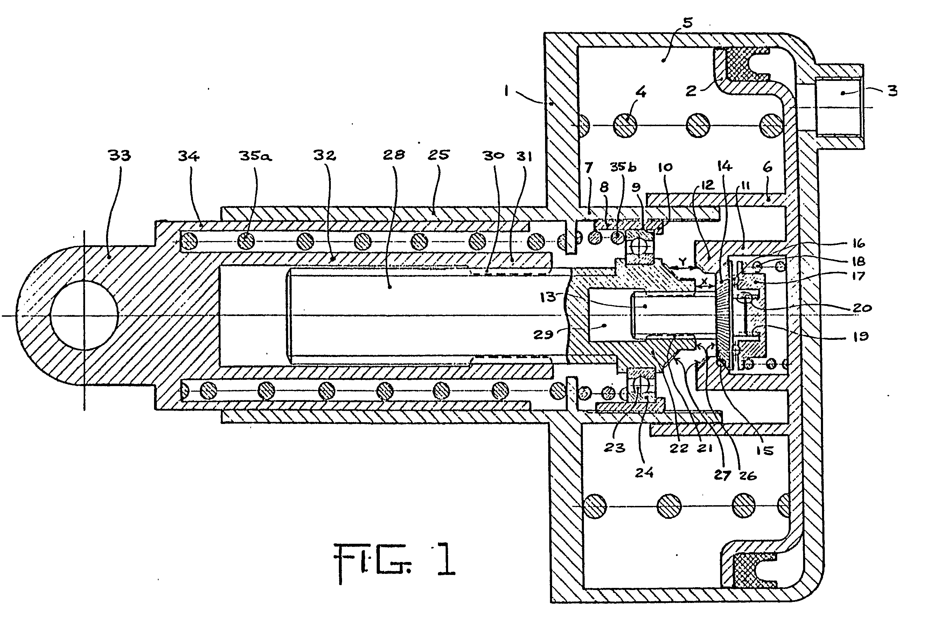

Referring first to the embodiment in Fig. 1 the reference numeral 1 designates a cylinder housing containing a piston 2 slidably therein. A pressurised fluid may be supplied through an inlet 3 in the cylinder and act upon one side of the piston 2 the other side of which is influenced by a piston return spring 4. A variable volume chamber 5 in the cylinder containing said return spring 4 is vented to the atmosphere and contains a sleeve 6 rigidly connected to the piston 2 and telescopically slidably surrounding another sleeve 7 rigidly connected to the housing 1. The sleeve 7 is provided with a threaded further sleeve 8 having a flange 10 at its end towards the right in Fig. 1. Said flange 10 provides a shoulder surface 9 active in the axial direction which in the following is called the brake applying direction. The axial position of the further sleeve 8 may be adjusted relative the housing 1. The piston 2 also carries a still further sleeve 11 having an inwardly directed flange 12 providing two conically shaped clutch surfaces one active in the brake applying direction the other active in the opposite direction hereinafter called the brake release direction. A governing spindle 13 protrudes into the still further sleeve 11 and is provided with a flange 14 providing a conical clutch surface active in the brake applying direction and adapted to establish a first clutch 15 with one of the clutch surfaces of the flange 12. The clutch surfaces forming the clutch 15 are serrated so as to be capable of transmitting substantial torque. The flange 14 is axially influenced by a ball bearing 16, a spring support 17 and a compression spring 18 resting against the piston 2. The governing spindle 13 and the spring support 17 are provided with coaxially arranged cylindrical surfaces of equal diameter surrounded by a tightly wound spring 19 providing a one-way clutch connection 20 between the governing spindle 13 and the spring support 17 which is prevented from rotation relative the piston 2 by its connection via the spring 18.

The governing spindle 13 is provided with threads 21 of such pitch as to be non-selflocking and is screwed into a governing nut 22 carrying a ball bearing 23 active in axial and radial directions. Said ball bearing 23 is axially displaceable relative to the sleeve 8. However, its axial movement in the brake release direction is limited by the shoulder surface 9.

The end surface of the governing nut 22 facing the piston 2 is located at a distance X from an adjacent opposite directed shoulder surface on the flange 14 in the relative position shown in Fig. 1 corresponding to fully released brake position. This distance X corresponds to the desired slack in the brake rigging. The said two surfaces from a stop designated by 26. The governing nut 22 is also provided with a conical clutch surface adapted to cooperate with the adjacent conical clutch surface on the flange 12 and form a second clutch designated by 27. The clutch surfaces forming the second clutch are serrated so as to be capable of transmitting a substantial torque. In the position shown the axial distance between the clutch surfaces of the clutch 27 is of the magnitude Y which at least corresponds to the distance X plus the necessary travelling distances for disengaging clutch 15 and engaging clutch 27.

The governing nut 22 is rigidly connected to an adjuster spindle 28 having a cavity 29 into which the governing spindle 13 may protrude more or less. The adjuster spindle 28 has a greater diameter than the diameter of the governing spindle 13 and is also provided with threads 30 of a non-selflocking pitch carrying an adjuster nut 31. The threads 30 of the adjuster spindle 28 are preferably of a greater pitch than the pitch of the threads 21 of the governing spindle 13. The adjuster nut 31 is rigidly connected to a push sleeve 32 which at the end remote from the piston 2 is provided with a connection eye 33 for direct or indirect connection to friction elements of a friction brake not shown. The sleeve 32 is provided with a guide tube 34 fitted axially movable in an externally from the housing 1 extending part 25 of the sleeve 7. The assembly of the connecting eye 33, the push sleeve 32 and the guide tube 34 is prevented from rotation either by the connection to the brake rigging or by guiding means (not shown) arranged between tube 34 and part 25 of the sleeve 7. A manual rotation of the said assembly 32, 33, 34 may be carried out e.g. after disconnection of the eye 33 from the brake rigging or after release of a locking device designed in a way similar to the one shown in DE—PS 1 153 41. A spring 35a is prestressed and located between shoulder surfaces on the assembly 32, 33, 34 and a flange on the housing 1. A further spring 35b is prestressed and located between a flange on the housing 1 and an outer ring 24 of the ball bearing 23.

The force of the spring 35a is transmitted to the assembly 32, 33, 34 and via the threads 30 to the adjuster spindle 28. This force, transmitted via the threads 30, will cause a torque on the adjuster spindle 28 and said torque is, via the threads 21, transformed into an axial force, transmitted to the governing spindle 13, the flange 14, the clutch 15, the flange 12, the sleeve 11, the piston 2 and the return spring 4 to the housing 1.

The device described above and shown in Fig. 1 will operate as follows:

In order to activate the brake, the cylinder is pressurised through inlet 3 and the piston 2 will move in the brake applying direction against the influence of the return spring 4. The piston 2 will cause the spring 18, the spring support 17, the bearing 16 and the flange 14 of the governing spindle 13 to participate in said movement as long as slack exists in the brake rigging. The clutch 15 will remain engaged, and the governing spindle 13 is thus locked against rotation by the piston 2 which is prevented from rotation relative the housing 1 by means not shown. The spring 35b keeps the ball bearing ring 24 in contact with the shoulder surface 9 on the flange 10. Thus the axial movement of the governing spindle 13 in the brake applying direction will — due to the force of the spring 35a and the non-selflocking threads 21 and 30 — cause a rotation of the adjuster spindle 28 and the governing nut 22. The distance X will decrease and the adjuster nut 31 will be axially displaced in the brake applying direction. During the movements along the two non-selflocking threads 21 and 30 a gear ratio will arise between the movements of the piston 2 and the push sleeve 32 corresponding to the ratio between the pitches of the two non-selflocking threads 21 and 30. It is thus possible to obtain a longer travel of the sleeve 32 than the travel of the piston 2.

Now in case of a real slack in the brake rigging corresponding to the desired slack, the above described movements will continue until the flange 14 engages the adjuster nut 22 — i.e. the stop 26 becomes active. The slack is now exhausted and the braking surfaces engage each other causing a substantially increasing resistance against further movements of the connection eye 33 in the brake applying direction. As the piston 2 continues its travel the springs 18 and 35a cannot move the assembly 32, 33, 34 further in the brake applying direction. Said assembly will for a moment remain stationary. Also the adjuster spindle 28, the adjuster nut 22 and the governing spindle 13 will remain stationary. However, the further movement of the piston 2 will now cause a compression of the spring 18 so that the clutch 15 will be disengaged and — after a further piston travel — the clutch 27 will be engaged and thus the adjuster spindle 28 locked against rotation. A still further travel of the piston 2 will now cause a direct corresponding travel in the brake applying direction of the adjuster nut 22, the adjuster spindle 28 and the assembly 32, 33, 34. The brake force transmitted will now increase rapidly during elastic deformation of the brake rigging. During the said last mentioned stage of operation there is no increased movement of the push sleeve 32 relative the movement of the piston 2.

The spring 35a is expanded and the spring 35b is compressed. The ball bearing ring 24 will leave its contact with the surface 9 on the flange 10.

During the following brake release, initially the pressure behind the piston 2 is lowered and the return spring 4 as well as the elasticity built up in the brake rigging will cause a movement of the piston 2 in the brake release direction. Initially said movement will be performed while the governing nut 22, the adjuster spindle 28, the push sleeve 32 and the connection eye 33 is connected to the piston 2 via the clutch 27. The moment the force between the braking surfaces has ceased the ball bearing ring 24 will have reached its position against the surface 9 on the flange 10. The further travel of the piston 2 in the brake release direction is now only caused by the return spring 4 and the governing nut 22 is prevented from further axial movement. The governing spindle 13 will now remain stationary and the clutch 27 will disengage. After a further travel of the piston 2 the clutch 15 will be engaged and during still further travel of the piston 2 the governing spindle 13 will participate in said movement and cause the governing nut 22 to rotate due to the non-selflocking threads 21. The rotation of the adjuster nut 22 causes the same rotation of the adjuster spindle 28 and due to the threads 30 the adjuster nut 31 will move on the adjuster spindle 28 axially in the brake release direction, thereby producing slack between the braking surfaces. The force of the return spring 4 and the force of the spring 35b should be greater than the force of the spring 35a. A gap will now develop and grow between the adjacent stop surfaces 26 on the adjuster nut 22 and the flange 14 until the distance X has been restored.

Now in case of excessive slack between the braking surfaces in the brake rigging — e.g. due to wear — a brake application will initially be performed as described above until the gap X between the stop surfaces 26 has been consumed. However, at this moment the braking surfaces have not yet engaged each other and the resistance against the travel in the brake applying direction of the connection eye 33 is still rather modest. During a further travel of the piston 2 the clutch 15 will be disengaged and the governing spindle 13 is no longer locked against rotation. As the clutch 27 is not yet engaged, the force of the spring 35a will cause the connection eye 33 (and the other parts of the assembly 32, 33, 34) to move in the brake applying direction until the braking surfaces engage each other and provide an increased resistance against such movement. During this movement of the assembly 32, 33, 34 the adjuster spindle 28 and the governing nut 22 will not move axially but will rotate in the non-selflocking threads 30. The governing spindle 13 cannot be screwed into the governing nut 22 due to the contact between the stop surfaces 26 and will thus follow the rotation of the adjuster nut 22 — such rotation being allowed by the one-way clutch 20. The excessive slack between the braking surfaces has now been adjusted to the desired value and during further travel of the piston 2 in the brake applying direction the clutch 27 will be engaged and the further brake application procedure will be performed as described above while a rigid connection is established between the piston 2 and the connection eye 33.

The following brake release operation will be performed in the same way as previously described.

In case of insufficient slack in the brake rigging the brake surfaces will be engaged prior to a piston stroke corresponding to the distance X. Thus the stop surfaces 26 will not have engaged each other at this moment. During a further stroke of the piston 2 the assembly 32, 33, 34 as well as the adjuster spindle 28, the governing nut 22 and the governing spindle 13 will cease to move forward in the brake applying direction. During further travel of the piston 2 the clutch 15 will be disengaged. The governing spindle 13, however, cannot be screwed into the governing nut 22 by means of the spring 18 due to the fact that the oneway clutch 20 prevents any rotation in this direction. During further travel of the piston 2 the assembly 32, 33, 34 the adjuster spindle 28 and the governing spindle 13 as well as the spring support 17 will remain stationary while the spring 18 is compressed and after a further travel of the piston 2 the clutch 27 will be engaged. The piston 2 is now again rigidly connected to the assembly 32, 33, 34 and the further brake application procedure will be performed as described above. The ball bearing ring 24 will leave its contact with the surface 9 on the flange 10, leaving a gap corresponding to the elastic deformations in the brake rigging.

During the following brake release all parts being displaced in the brake applying direction in Fig. 1 will return in the brake release direction until the ball bearing ring 24 again contacts the surface 9 on the flange 10. At this moment the braking surfaces are in contact without transmitting any force. During further return movement of the piston 2 the clutch 27 will disengage and after a further return stroke of the piston 2 corresponding to the difference between the desired slack and the existing, insufficient slack in the rigging the clutch 15 is engaged during the interval when the two clutches 27 and 15 are disengaged the one-way clutch 20 will prevent the governing spindle 13 from screwing into the governing nut 22 which is kept stationary by the spring 35b. The spring 18 is expanding while trying to influence the governing spindle 13 to perform said movement. During the remaining return movement of the piston 2 the governing spindle 13 will follow the piston 2 without rotation due to the engaged clutch 15. It will thus cause the governing nut 22 to rotate due to its connection via the threads 21, and the adjuster nut 31 will — due to the rotation of the adjuster spindle 28 following the governing nut 22 — move in the brake release direction as previously described. The adjuster nut 31 will cause a corresponding movement of the assembly 32, 33, 34 while the spring 35a is compressed and the breaking surfaces will be displaced away from each other. No adjustment has been performed.

In case it should be desired to perform an automatic slack adjustment by means of a device of the type shown in Fig. 1 during the return stroke (and not during the brake application as above described) the spring 35a need only be dimensioned so weak that it will be unable to push the assembly 32, 33, 34 forward. The spring 35a should be so weak that it cannot overcome the friction resistance in the brake rigging including the force of any external return springs. During a brake application with excessive slack the device will operate as previously described until the stop surfaces 26 engage each other. During the further piston stroke the spring 35a cannot push the assembly 32, 33, 34 after the disengagement of the clutch 15. The assembly 32, 33, 34 will remain stationary together with the adjuster spindle 28, the governing nut 22 and the governing spindle 13, and the clutch 27 will engage after a short further stroke of the piston 2. Now a rigid connection has been established between the piston 2 and the assembly 32, 33, 34. The further movement of the piston 2 in the brake applying direction will be directly transmitted to the assembly 32, 33, 34 during the remaining part of the idle brake stroke and during the final building up of the brake force in the brake rigging. The gap between the surface 9 on the flange 10 and the ball bearing ring 24 will now correspond to the sum of the excessive part of the slack in the brake rigging and the elasticity in the rigging during the final increase in brake force.

During the following brake release the piston 2 together with the other parts which have been displaced in the brake applying direction will move in the brake release direction until the brake force at the braking surfaces has ceased. During further return movement of the piston 2 the assembly 32, 33, 34 will remain stationary together with the adjuster spindle 28 and the governing nut 22, until the clutch 27 becomes disengaged. The spring 35b may now push the ball bearing ring 24 towards the surface 9 on the flange 10 during the further return movement of the piston 2 and simultaneously the adjuster spindle 28 will be screwed out of the stationary adjuster nut 31 and moved in the brake release direction. The stop surfaces 26 have not yet been disengaged and therefore the governing nut 22 following the rotation of the adjuster spindle 28 will cause the governing spindle 13 to follow its movements. The one-way clutch 20 will allow the governing spindle 13 to rotate in this direction. As soon as the gap between the ball bearing ring 24 and the surface 9 on the flange 10 has been consumed, the excessive part of the slack in the brake rigging has been compensated for. During the remaining part of the return stroke of the piston 2 the clutch 15 will be engaged, the governing spindle 13 will be locked against rotation and follow the axial movement of the piston 2. The governing nut 22 axially retained by the bearing 23 will be caused to rotate due to the non-selflocking threads 21. This rotation will cause the same rotation of the adjuster spindle 28 and due to the non-selflocking threads 30 the adjuster nut 31 will move on the adjuster spindle 28 axially in the brake release direction, thereby producing the desired slack between the braking surfaces.

The device shown in Fig. 1 is single-acting, i.e. it will only compensate for excessive slack — not for insufficient slack. If it is desired — e.g. when fitting new brake blocks — to increase the slack in the brake rigging this may be done manually by releasing the connection eye 33 from its connection to the brake rigging and manually rotate the assembly 32, 33, 34 thereby causing the adjuster nut 31 to move in the brake release direction on the adjuster spindle 28. In case the connection eye 33 is connected to the brake rigging by means allowing relative rotation it is possible — as already previously mentioned — to provide a locking device (not shown) against relative rotation between the tubes 25 and 34. Such locking device could be manually releasable and thus allow a direct manual rotation of the adjuster nut 31. Finally it would be possible to provide a device — not shown — by means of which the function of the one-way clutch 20 could be manually or automatically eliminated in the released brake position. If such device is provided it is possible to increase the slack simply by pushing the connection eye 33 in the brake release direction. This would cause the adjuster spindle 28 to rotate due to the non-selflocking threads 30. The governing nut 22 will participate in said rotation and cause the governing spindle 13 to move in the brake release direction against the force of the spring 18 until the clutch 15 disengages. As the one-way clutch 20 is inactive the governing spindle 13 will now follow the rotation of the governing nut 22. As soon as the movement of connection eye 33 has ceased the clutch 15 will be reengaged due to the force of the spring 18.

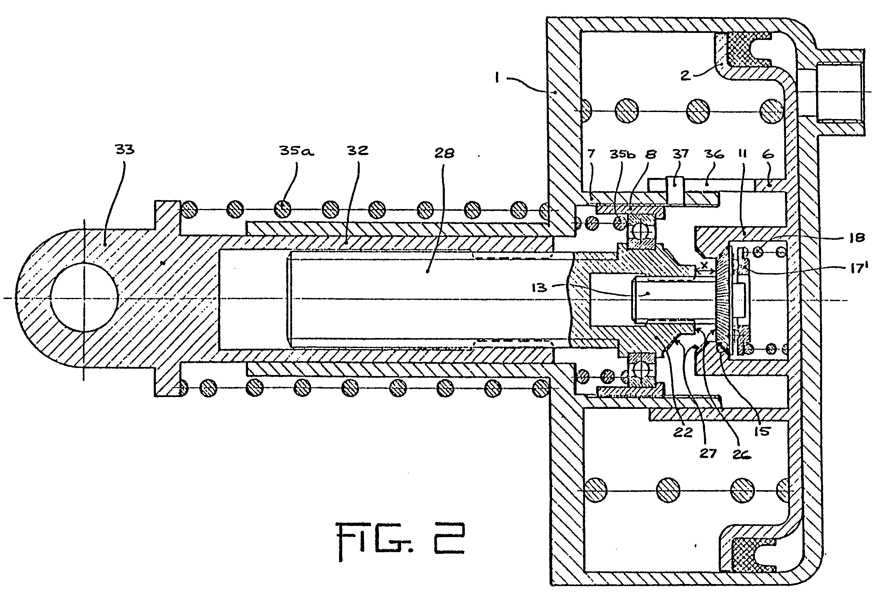

In case the slack-adjuster should be of the double-acting type, i.e. it should be able to automatically restore also an insufficient slack to the desired value it is only necessary to remove the spring 19 of the one-way clutch 20. Such device is shown in Fig. 2.

The device shown in Fig. 2 differs from the one in Fig. 1 mainly in the one-way clutch 20 being omitted. The spring support designated by 17' has been given a simpler design. Also the sleeve 6 rigidly connected to the piston 2 has been provided with an axially extending slot 36 in which a pin 37 protrudes, said pin 37 being rigidly connected to the sleeve 7 which is a part of the housing 1. This is to show a possible way of locking the piston 2 against rotation. On all described types of brake units according to the invention, the piston 2 must be locked against rotation. Also shown is an alternative design where spring 35a is situated externally and the guide sleeve 34 is omitted.

In case of normal or excessive slack in the brake rigging, the device shown in Fig. 2 will operate exactly in the same way as the device shown in Fig. 1 and no further explanation is needed.

In case of insufficient slack in the brake rigging a brake application will be performed as follows:

The piston 2 will move in the brake applying direction. The clutch 15 will remain engaged and the governing spindle 13 will participate in the axial movement. The governing nut 22 and the adjuster spindle 38 will not move axially because of the spring 35b, but they will rotate and thus cause an axial movement of the assembly 32, 33 until the braking surfaces are engaged. However, due to the insufficient slack in the brake rigging the contact between the braking surfaces is obtained prior to the engagement of the two stop surfaces 26. During a further stroke of the piston 2 the assembly 32, 33 will remain stationary due to the substantial increase in resistance against further movements in the brake applying direction. The adjuster spindle 28 and the governing spindle 13 will also remain stationary until the clutch 15 is disengaged. Now the spring 18 will cause the governing spindle 13 to rotate and to be axially displaced into the governing nut 22 following the movement of the piston 2 until the gap X between the stop surfaces 26 has been consumed. During further travel of the piston 2 the clutch 27 will be engaged and the piston 2 is now — as previously described in connection with Fig. 1 — rigidly connected to the assembly 32, 33. A further movement of the piston 2 will now cause elastic deformation in the brake rigging and cause an increase in brake force. It will be understood that the axial displacement of the governing spindle 13 into the governing nut 22 after the application of the brake will restore the slack in the brake rigging to the desired value during the following brake release operation.

A manual increase of the slack in the brake rigging may be performed with a device according to Fig. 2 simply by pushing the connection eye 33 in the brake release direction as described in connection with Fig. 1 with the one-way clutch 20 eliminated.

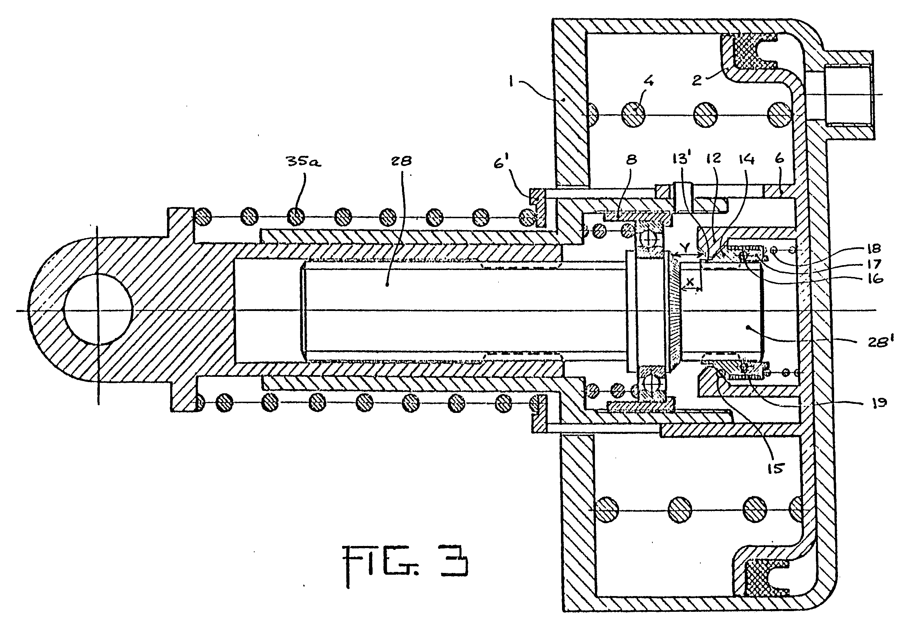

The embodiment shown in Fig. 3 functions in the same way as the device shown in Fig. 1. The adjuster spindle 28 however, carries an extension 28' in the brake release direction. This extension 28' is provided with non-selflocking threads of the same pitch (or smaller) as the pitch of the adjuster spindle 28. The extension 28' carries a nut 13' having a flange 14 providing a clutch 15 together with a flange 12 connected to the piston 2.

A further difference is that the spring 35a according to Fig. 3 is supported at a flange 6' on the sleeve 6 rigidly connected to the piston 2.

It will be understood that the nut 13' has a function equivalent to the function of the governing spindle 13 in Fig. 1. The support of the spring 35a against the piston 2 reduces the force of the return spring 4. As the whole spring 35a follows the piston 2 at the beginning and at the end of each braking cycle, the return spring 4 does not need to have the force necessary for reloading the spring 35a at the end of the brake release. Thus the internal counterforce i.e. the resistance against movements of the piston 2 offered by the return spring 4 will be decreased.

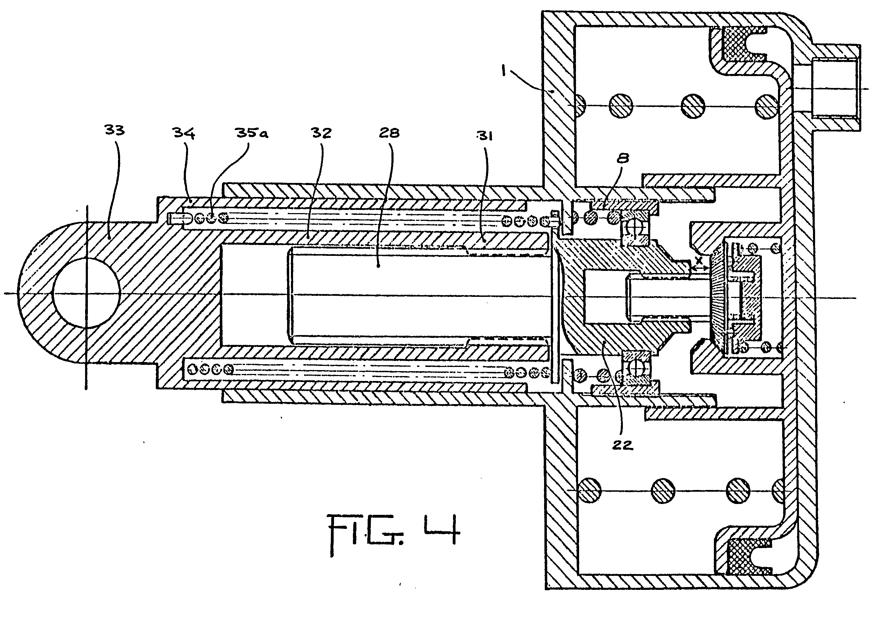

The embodiment in Fig. 4 differs from the one in Fig. 1 thereby that the spring 35a in Fig. 4 is designed as a coiled torsion spring having no axial force but only a torque. Said torque is transmitted directly between the assembly 32, 33, 34 and the adjuster spindle 28. As the torque to the adjuster spindle 28 and the governing nut 22 is applied directly from the spring 35a, less energy is lost in the thread connection between the adjuster spindle 28 and the adjuster nut 31.

It is possible to prevent rotation of the spring support 17 relative the piston 2 in a way similar to the means 36, 37 for preventing rotation of the piston 2 relative the housing 1 has shown in Fig. 2. A part (not shown) of the spring support 17 may protrude into a slot in the sleeve 11.

In the embodiments shown in Fig. 1—Fig. 4 the desired slack may be set by adjusting the distance X. This is done by axially displacing the sleeve 8 relative the housing 1.

It should be mentioned that the embodiments shown in Fig. 1—Fig. 4 — if used in a brake rigging in which the resistance against the movements for application of the brake exceeds the force of the spring 35a — will adjust the slack during the brake release. This provides for a reliable function.

List of Reference Numerals
1 Cylinder Housing
2 Piston
3 Inlet
4 Return spring
5 Variable Volume Chamber
6 Sleeve
7 Sleeve
8 Sleeve
9 Shoulder Surface
10 Flange
11 Sleeve
12 Flange
13 Governing Spindle
14 Flange
15 First Clutch
16 Ball Bearing
17 Spring Support
18 Compression Spring
19 Spring
20 One-way Clutch
21 Threads
22 Governing Nut
23 Ball Bearing
24 Ball Bearing Ring
25 Part of Sleeve 7
26 Stop Surfaces
27 Second Clutch
28 Adjuster Spindle
29 Cavity
30 Threads
31 Adjuster Nut
32 Push Sleeve
33 Connection Eye
34 Guide Tube
35a Spring
35b Further Spring
32, 33 Assembly
32, 33, 34 Assembly
6' Flange
13' Nut
28' Extension
X Distance
Y Distance

**Claims**

1. A brake unit, preferably for a railway vehicle brake rigging, comprising an automatically operation device for adjusting the slack between the wear surfaces of the brake and of the type in which a substantial part of the brake force is transmitted via a nut (22) clutchably enageable with a flange (12) following linear movements of a brake actuating part (11) of the unit and normally being locked against rotation, said nut (22) being connected via non-selflocking threads to a brake force transmitting element (32) which is displaceable relative said brake actuating part (11) in the directions of the movements of said brake actuating part (11), characterised in that a spring (35a) is mounted to exert a force on said nut (22) and said force transmitting element (32) having the shape of a sleeve (32) surrounding a spindle (28) integral with said nut (22) in such direction as to increase the total length of said sleeve (32) and said spindle (28), elements transmitting the force of said spring (35a) during the idle movement of the brake rigging comprising a flange (12) having a first clutch surface capable to transmit torque and an axial force and being connected to the piston (2) of a piston-cylinder unit (1,2) included in the brake unit, the cylinder (1) of said piston-cylinder unit (1,2) being provided with a shoulder surface (9) limiting the axial movement of the spindle (28) in the brake release direction and that the spindle (28) is movably mounted in the brake applying direction against the influence of a compression spring (35b), a locking element (13, 14) which is mounted to rotate and axially move relative to said spindle (28) through non-selflocking threads (21) and which is an element transmitting force from said spring (35a) being influenced by a further spring (18) resting against the piston (2) in the direction to form a clutch connection (15) with said first clutch surface on said flange (12), and that the piston (2) is provided with a second clutch surface adapted to transmit torque and axial forces in the direction opposite to the axial direction of said first clutch surface and adapted to form a clutch (27) with a corresponding clutch surface on said spindle (28, 22) in case shoulder surfaces (26) on the spindle (28, 22) and on the locking element (13, 14) being arranged at a smaller mutual axial distance have engaged each other and thereby disengaged the clutch connection (15) between said locking element (13, 14) and said flange (12).

2. A brake unit according to claim 1, characterised in that said compression spring 35a influencing said spindle 28 has been pre-stressed to a force exceeding the force transmitted during the idle movements of the brake rigging.

3. A brake unit according to claim 1, characterised in that the said locking element 13, 14 is connected to the piston 2 via a one-way clutch 20 allowing rotation of the locking element 13, 14 relative to the spindle 28 only in the direction causing axial displacement of the locking element 13, 14 in the brake release direction relative to the spindle 28.

4. A brake unit according to claim 1, characterised in that the pitch of the threads 21 of the locking element 13, 14 is smaller that the pitch of the threads 30 connecting the spindle 28 with the sleeve 32.

5. A brake unit according to claim 1, characterised in that said spring 35a mounted to exert a force on said spindle 28 and said sleeve 32 in the direction to increase their total length is a pre-stressed compression spring mounted between a shoulder on said sleeve 32 and a shoulder 6' on a guide member rigidly connected to the piston 2.

6. A brake unit according to claim 1, characterised in that said spring 35a mounted to exert a force on said spindle 28 and said sleeve 32 in the direction to increase their total length is torsion spring rigidly connected in torque directions to said sleeve 32 and to said spindle 28.

7. A brake unit according to claim 1, characterised in that said shoulder surface 9 limiting the axial movement of the spindle 28 in the brake release direction has been mounted adjustably in the axial direction in the housing 1.

## Revendications

1. Equipement de frein, de préférence timonerie de frein pour un véhicule sur rails, comportant un dispositif opérant automatiquement le rattrapage du jeu entre les surfaces d'usure du frein, du type dans lequel une partie essentielle de la force de freinage est transmise par l'intermédiaire d'un écrou (22) susceptible de coagir avec un flasque (12) à la suite de déplacements linéaires d'un élément de commande (11) de frein de l'équipement et d'être normalement bloquée contre une rotation, ledit écrou (22) étant relié, par l'intermédiaire d'un filetage non-autobloquant, à un élément (32) transmettant une force de freinage et susceptible d'être déplacé par rapport audit élément de commande (11) du frein, dans les directions de déplacements dudit élément de commande (11) du frein, caractérisé par le fait qu'un ressort (35a) est monté de façon à exercer une force sur ledit écrou (22) et ledit élément (32) transmettant la force ayant la forme d'une douille (32) entourant une broche (28) liée audit écrou (22) dans une direction capable d'augmenter la longueur totale de ladite douille (32) et de ladite broche (28), les éléments qui transmettent la force dudit ressort (35a), pendant la course morte de la timonerie, comportant un flasque (12) ayant une première surface d'embrayage capable de transmettre un couple et une face axiale, et étant relié au piston (2) d'un ensemble piston-cylindre (1, 2) compris dans l'équipement de frein, le cylindre ()1) dudit ensemble piston-cylindre (1, 2) étant pourvu d'une surface d'épaulement (9) qui limite le déplacement axial de la broche (28) dans le sens du desserrage du frein, et que la broche (28) est montée de façon à pouvoir se déplacer dans le sens de l'application du frein, à l'encontre de l'action d'un ressort de compression (35b), un élément de blocage (13, 14) que est monté de manière à pouvoir tourner et à se déplacer axialement par rapport à ladite broche (28), par l'intermédiaire d'un filetage non-autobloquant (21) et qui est un élément transmettant la force dudit ressort (35a) et étant sous l'influence d'un autre ressort (18), portant contre le piston (2) dans la direction adaptée à réaliser une liaison à embrayage (15) avec ladite première surface d'embrayage dudit flasque (12), et que le piston (2) est pourvu d'une seconde surface d'embrayage adaptée à transmettre un couple et des forces axiales dans la direction opposée à la direction axiale de ladite première surface d'embrayage et adaptée à former un embrayage (27) avec une surface d'embrayage correspondante de ladite broche (28, 22) lorsque des surfaces d'épaulement (26) de la broche (28, 22) et de l'élément de verrouillage (13, 14) situés à une distance axiale mutuelle, sont en contact entre elles et provoquent le dégagement de la liaison d'embrayage (15) entre ledit élément de verrouillage (13, 14) et ledit flasque.

2. Equipement de frein selon la revendication 1, caractérisé par le fait que ledit ressort de compression (35a) qui influence ladite broche (28) a subi une tension préalable avec une force qui est supérieure à la force transmise pendant les courses mortes de la timonerie de frein.

3. Equipement de frein selon la revendica-

15 **0 036 568** 16

tion 1, caractérisé par le fait que ledit élément de blocage (13, 14) est relié au piston (2) par l'intermédiaire d'un embrayage unilatéral (20) qui permet la rotation des éléments de verrouillage (13, 14) par rapport à la broche (28) seulement dans la direction qui conduit à un déplacement axial de l'élément de verrouillage (13, 14) dans la direction du desserrage du frein, par rapport à la broche (28).

4. Equipment de frein selon la revendication 1, caractérisé par le fait que le pas des filets (21) de l'élément de verrouillage (13, 14) est inférieur au pas des filets (30) reliant la broche (28) à la douille (32).

5. Equipement de frein selon la revendication 1, caractérisé par le fait que ledit ressort (35a) qui est monté pour exercer une force sur ladite broche (28) et sur ladite douille (32), dans la direction conduisant à un accroissement de leur longueur totale, est un ressort de compression préarmé, monté entre un épaulement prévu sur ladite douille (32) et un épaulement (6') prévu sur un élément de guidage qui est relié rigidement au piston (2).

6. Equipement de frein selon la revendication 1, caractérisé par le fait que ledit ressort (35a) qui est monté de façon à exercer une force sur ladite broche (28) et sur ladite douille (32), dans la direction qui tend à augmenter leur longueur totale, est un ressort a torsion, relié rigidement à ladite douille (32) et à ladite broche (28), dans les directions du couple.

7. Equipement de frein selon la revendication 1, caractérisé par le fait que ladite surface d'épaulement (9) qui limite le déplacement axial de la broche (28), dans la direction du desserrage du frein, a été montée dans le carter (1), de façon à être réglable en direction axiale.

**Patentansprüche**

1. Bremseinheit, insbesondere für ein Schienenfahrzeug-Bremsgestänge, beinhaltend eine selbsttätige Arbeitseinrichtung zum Einstellen des Spiels zwischen der Verschleißflächen der Bremse und von dem Typ, bei welchem ein wesentlicher Teil der Bremskraft über eine Mutter (22) übertragen wird, die kupplungsartig an einem Flansch (12) eingreifen kann, der linearen Bewegungen eines Bremsbetätigungsteils (11) der Einheit folgt und normalerweise gegen Verdrehen gesichert ist, wobei die genannte Mutter (22) über nicht-selbsthemmende Gewinde mit einem Bremskraftübertragungselement (32) verbunden ist, welches relativ zum genannten Bremsbetätigungsteil (11) in den Bewegungsrichtungen dieses Bremsbetätigungsteils (11) verschiebbar ist, dadurch gekennzeichnet, daß eine Feder (35a) angebracht ist zum Ausüben einer Kraft auf die genannte Mutter (22) und auf das genannte Kraftübertragungselement (32), das die Form einer Hülse (32) hat, welche eine Spindel (28) umfaßt, die mit der genannten Mutter (22) eine Einheit bildet, in der Richtung zum Vergrößern der Gesamtlänge der genannten Hülse (32) und der genannten Spindel (28), mit Elementen, zum Übertragen der Kraft der genannten Feder (35a) während des Leerweges des Bremsgestänges, die einen Flansch (12) mit einer ersten Kupplungsfläche zum Übertragen von Drehmomenten und einer Axialkraft aufweisen und mit dem Kolben (2) einer in der Bremseinheit enthaltenen Kolben/Zylinder-Einheit (1, 2) verbunden sind, wobei der Zylinder (1) dieser Kolben/Zylinder-Einheit (1, 2) mit einer Schulterfläche (9) versehen ist, durch welche die Axialverschiebung der Spindel (28) in Bremslöserichtung begrenzt wird, und daß die Spindel (28) in Bremsbetätigungsrichtung gegen die Einwirkung einer Druckfeder (35b) beweglich angeordnet ist, mit einem Feststellelement (13, 14), das so angebracht ist, daß es drehbar und durch nicht-selbsthemmende Gewinde (21) gegenüber der genannten Spindel (28) axial verschiebbar ist und das ein Element darstellt, weches Kraft von der genannten Feder (35a) überträgt und von einer weiteren, am Kolben (2) anliegenden Feder (18) in der Richtung beeinflußt wird, daß mit der genannten ersten Kupplungsfläche am genannten Flansch (12) eine Kupplungsverbindung (15) gebildet wird, daß weiterhin der Kolben (2) mit einer zweiten Kupplungsfläche versehen ist, die Drehmoment und Axialkräfte in der Richtung entgegengesetzt zur axialen Richtung der genannten ersten Kupplungsfläche übertragen kann und die mit einer entsprechenden Kupplungsfläche an der genannten Spindel (28, 22) eine Kupplung (27) bilden kann, wenn die in einem geringeren axialen Abstand voneinander angeordneten Schulterflächen (26) an der Spindel (28, 22) und am Feststellelement (13, 14) ineinandergegriffen und dadurch die Kupplungsverbindung (15) zwischen dem genannten Feststellelement (13, 14) und dem genannten Flansch (12) ausgerückt haben.

2. Eine Bremseinheit gemäß Anspruch 1, dadurch gekennzeichnet, daß die genannte Druckfeder (35a), die auf die genannte Spindel (28) wirkt, mit einer Kraft vorgespannt ist, die größer ist als die während der Leerwege des Bremsgestänges zu übertragende Kraft.

3. Eine Bremseinheit gemäß Anspruch 1, dadurch gekennzeichnet, daß das genannte Feststellelement (13, 14) mit dem Kolben (2) über eine Einwegkupplung (20) verbunden ist, die eine Drehung des Feststellelementes (13, 14) gegenüber der Spindel (28) nur in der Richtung zuläßt, die in Bremslöserichtung eine Axialverschiebung des Feststellelementes (13, 14) relativ zur Spindel (28) bewirkt.

4. Eine Bremseinheit gemäß Anspruch 1, dadurch gekennzeichnet, daß die Steigung der Gewinde (21) des Feststellelementes (13, 14) kleiner ist als die Steigung der Gewinde (30), die die Spindel (28) mit der Hülse (32) verbinden.

5. Eine Bremseinheit gemäß Anspruch 1, dadurch gekennzeichnet, daß die genannte Feder (35a), die angebracht ist, um eine Kraft auf die genannte Spindel (28) und die genannte Hülse (32) in der Richtung auszuüben, daß deren Gesamtlänge vergrößert wird, eine vorgespannte Druckfeder ist, die zwischen einer Schulter an der genannten Hülse (32) und einer Schulter (6') an einem starr mit dem Kolben (2) verbundenen Führungsstück angebracht ist.

6. Eine Bremseinheit gemäß Anspruch 1, dadurch gekennzeichnet, daß die genannte Feder (35a), die angebracht ist, um eine Kraft auf die genannte Spindel (28) und die genannte Hülse (32) in der Richtung auszuüben, daß deren Gesamtlänge vergrößert wird, eine Torsionsfeder ist, die in den Drehmomentrichtungen mit der genannten Hülse (32) und der genannten Spindel (28) starr verbunden ist.

7. Eine Bremseinheit gemäß Anspruch 1, dadurch gekennzeichnet, daß die genannte Schulterfläche (9) zur Begrenzung der Axialverschiebung der Spindel (28) in Bremslöserichtung in axialer Richtung verstellbar im Gehäuse (1) angebracht ist.

FIG. 1

0 036 568

FIG. 2

FIG. 3

FIG. 4